Europäisches Patentamt

European Patent Office

Office européen des brevets

(11) Veröffentlichungsnummer: **0 345 445**

**A1**

(12) # EUROPÄISCHE PATENTANMELDUNG

(21) Anmeldenummer: **89107189.6**

(22) Anmeldetag: **21.04.89**

(51) Int. Cl.4: **B60K 17/35 , F16H 55/08**

(30) Priorität: **09.06.88 DE 3819703**

(43) Veröffentlichungstag der Anmeldung:
**13.12.89 Patentblatt 89/50**

(84) Benannte Vertragsstaaten:
**CH DE ES FR GB IT LI SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Meffert, Peter, Dipl.-Ing. (FH)**
**Blauenstrasse 3/1**
**D-7533 Tiefenbronn(DE)**
Erfinder: **Schwarz, Heinrich, Dipl.-Ing.**
**Grünewaldstrasse 12**
**D-7533 Tiefenbronn(DE)**
Erfinder: **Patzer, Jürgen, Dipl.-Ing.**
**Gartenstrasse 20**
**D-7441 Neckartailfingen(DE)**

(54) **Allrad-Sperrsystem für ein Kraftfahrzeug.**

(57) Im Antriebsstrang eines Kraftfahrzeugs ist als Allrad-Sperrsystem ein Planetengetriebe angeordnet, auf dessen Planetenträger eine Bremsvorrichtung einwirkt. Das Planetengetriebe besteht aus einem Eingangssonnenrad, einem koaxial daneben gelagerten Ausgangssonnenrad und den mit beiden Sonnenrädern zugleich kämmenden Planetenrädern. Um die Reibungsverluste gering zu halten und Selbsthemmung im Planetengetriebe zu vermeiden, ist der Normalmodul aller Zahnräder möglichst klein und proportional dem zu übertragenden Antriebsmoment, der Betriebseingriffswinkel möglichst groß bemessen.

FIG.1

EP 0 345 445 A1

## Allrad-Sperrsystem für ein Kraftfahrzeug

Die Erfindung betrifft ein Allrad-Sperrsystem für ein Kraftfahrzeug nach dem Oberbegriff des Anspruchs 1.

Ein derartiges Sperrsystem ist aus DE-PS 35 07 490 bekannt. In einem Planetengetriebe kämmen mit einem Eingangssonnenrad und einem koaxial daneben gelagerten Ausgangssonnenrad etwas geringerer Zähnezahl die auf dem Planetenträger gelagerten Planetenräder. Möglich wird das durch entsprechende Profilverschiebungen der Zahnräder. Die Übersetzung für den Direktdurchtrieb vom Eingangssonnenrad zum Ausgangssonnenrad weicht nur geringfügig von 1:1 ab, die Zahnradübersetzung vom Eingangssonnenrad zum Planetenträger wird aber sehr viel höher, z.B. 18:1. Tritt am Sperrsystem eine Drehzahldifferenz zwischen Eingangswelle und Ausgangswelle auf, so läuft der Planetenträger entsprechend der hohen Übersetzung mit hoher Drehzahl um. Eine am Planetenträger angreifende Bremsvorrichtung braucht deshalb nur ein geringes Bremsmoment aufzubringen, um den Planetentrieb zu sperren und somit Antriebsmoment von der einen zur anderen Fahrzeugachse zu übertragen. Schwierigkeiten ergaben sich gelegentlich, wenn ein Kraftfahrzeug mit einem solchen Sperrsystem beispielsweise am Berg unter hoher Last anfahren sollte. Hier kann es im Planetengetriebe infolge zu hoher Reibungsverluste zur Selbsthemmung kommen, vor allem dann, wenn normale, spangebend bearbeitete Zahnräder mit üblichen Rauhigkeitswerten von ca. 1 µm verwendet werden.

Es ist die Aufgabe der Erfindung, die Verzahnungen eines derartigen Planetenrad-Sperrsystems so zu gestalten, daß Selbsthemmung vermieden wird, ohne daß hierzu kostenaufwendige Fertigungsverfahren, wie Polieren oder Läppen der Zahnräder angewendet werden müssen.

Zur Lösung dieser Aufgabe dienen die kennzeichnenden Merkmale des Anspruchs 1. Aus der Vielzahl der die Zahnreibungsverluste beeinflussenden Parameter wird der Normalmodul m für eine Optimierung ausgewählt. Er wird entsprechend dem zu übertragenden Antriebsmoment so klein bemessen, wie es aus Festigkeitsgründen noch vertretbar ist. Als ergänzende Maßnahme zur Gewährleistung einer ausreichenden Zahnfußfestigkeit und Flankentragfähigkeit trotz des kleinen Moduls wird der Betriebseingriffswinkel $\alpha$ so groß gewählt, wie es aus übergeordneten, konstruktiven Erfordernissen möglich ist.

Weitere, die Erfindung ausgestaltende Merkmale enthalten die Unteransprüche.

Ein Ausführungsbeispiel der Erfindung ist in der Zeichnung dargestellt und wird nachfolgend erläutert. Es zeigen:

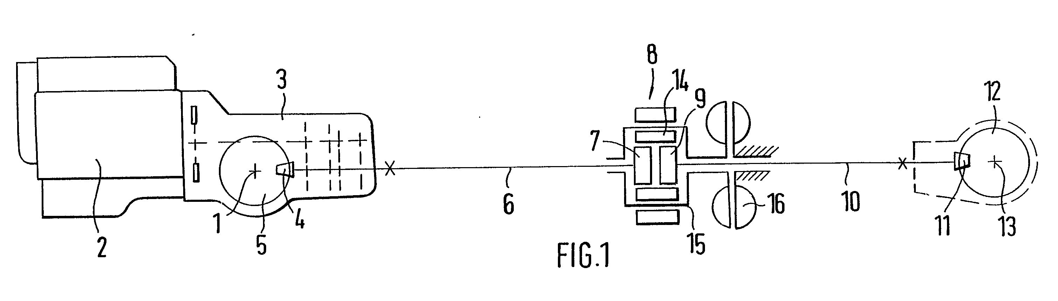

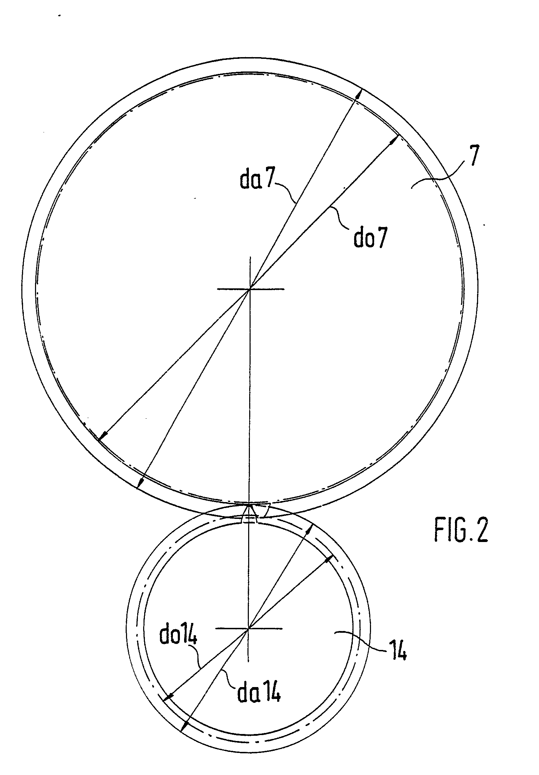

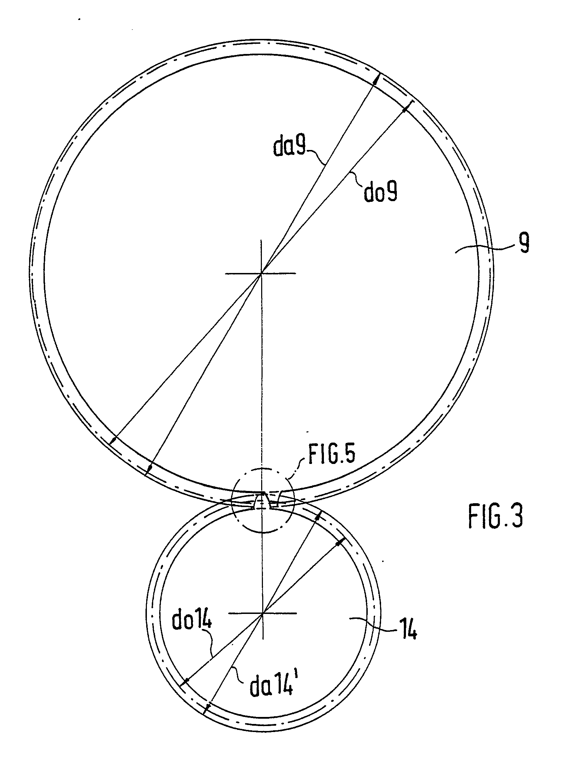

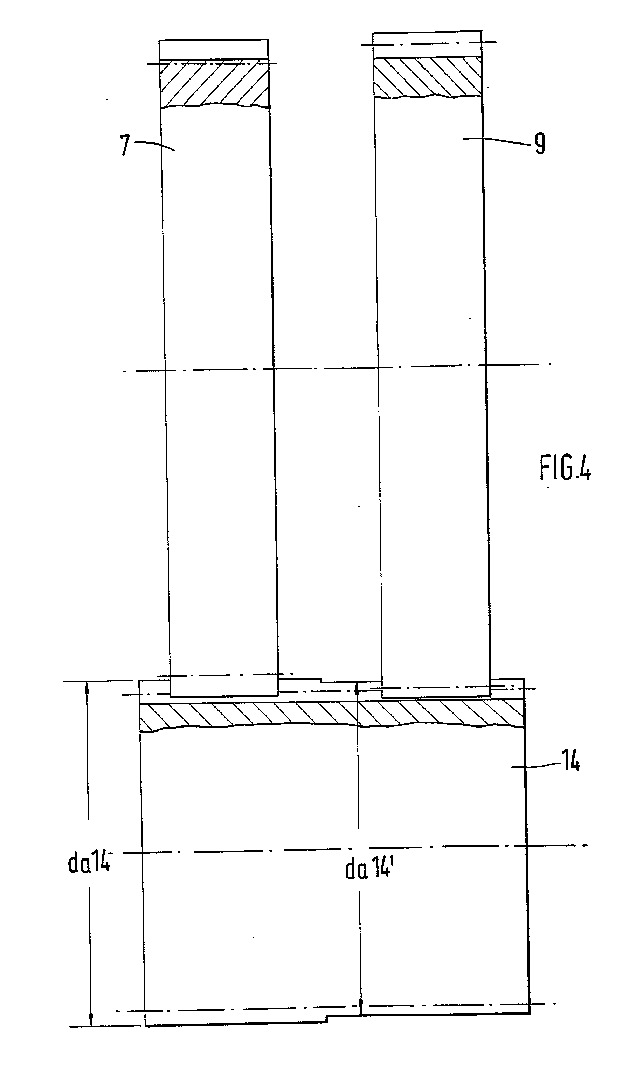

Fig. 1 Längsschnitt eines Allrad-Sperrsystems im Antriebsstrang eines Kraftfahrzeugs,

Fig. 2 schematische Seitenansicht auf das Planetengetriebe von links,

Fig. 3 schematische Ansicht auf das Planetengetriebe von rechts,

Fig. 4 schematischer Längsschnitt des Planetenradgetriebes,

Fig. 5 Zahneingriff Sonnenrad-Planetenrad

Ein nahe der Vorderachse 1 an einem Kraftfahrzeug angeordneter Antriebsmotor 2 treibt mit einem an ihm angebauten Gangschaltgetriebe 3 über ein Kegelrad 4 und ein Tellerrad 5 die Vorderachse 1 direkt an. Von dem Kegelrad 4 geht eine Antriebswelle 6 zu einem Eingangssonnenrad 7 eines Planetengetriebes 8. Koaxial zu dem Eingangssonnenrad 7 ist neben ihm ein Ausgangssonnenrad 9 gelagert, von dem eine Antriebswelle 10 zu dem Kegelrad 11 führt, das ein Tellerrad 12 der Hinterachse 13 antreibt.

Mit dem Eingangssonnenrad 7 und dem Ausgangssonnenrad 9 stehen Planetenräder 14 in Eingriff, die an einem Planetenträger 15 gelagert sind, der mit dem Bremsglied einer hydrodynamischen Bremse 16 starr verbunden ist.

Um die mechanischen Reibungsverluste im Planetengetriebe gering zu halten und eine Selbsthemmung des Planetenrad-Sperrsystems bei Anfahren des Kraftfahrzeugs unter Last zu vermeiden, werden die Zähne der Sonnenräder 7, 9 und Planetenräder 14 in besonderer Weise gestaltet. Für zwei miteinander in Eingriff stehende Zahnräder mit den Zähnezahlen Z1 und Z2 gelten allgemein folgende bekannte Berechnungsformeln:

$$P_{VZ} = P_a \cdot \eta_m \cdot H_v$$

wobei bedeuten

$P_{VZ}$ = Zahnreibungsverlustleistung

$P_a$ = Nennantriebsleistung

$\mu_m$ = mittlere Zahnreibungszahl
$H_V$ = Zahnverlustgrad
$Z_1$ = Zähnezahl des 1. Zahnrads
$Z_2$ = Zähnezahl des 2. Zahnrads

$$H_V = \frac{\pi\,(u + 1)}{Z_1 \cdot u \cdot \cos\beta_b} \cdot (1 - \epsilon_\alpha + \epsilon_1^2 + \epsilon_2^2)$$

$$\pi = 3,14$$

$$u = \frac{Z_1}{Z_2}$$

$\epsilon_\alpha$ = Profilüberdeckung
$\epsilon_1$ = Kopfüberdeckungsgrad am Rad 1
$\epsilon_2$ = Kopfüberdeckungsgrad am Rad 2
$\beta_b$ = Schrägungswinkel im Grundkreis

$$D = \frac{z \cdot m}{\cos\beta}$$

D = Teilkreisdurchmesser
m = Normalmodul
z = Zähnezahl
β = Schrägungswinkel im Teilkreis

Obwohl die Zahnreibungsverluste von vielen Faktoren abhängen, stellte es sich heraus, daß einer Selbsthemmung am weitaus wirksamsten begegnet werden kann, indem man den Normalmodul möglichst klein und die Zähnezahl möglichst groß macht. In einer Ausführungsform der Erfindung beträgt der Normalmodul m = 1,2 mm, die Zähnezahl des Eingangssonnenrades 7, $z_7$ = 59 Zähne, die Zähnezahl des Ausgangssonnenrades 9, $Z_9$ = 63 Zähne, die Zähnezahl der Planetenräder 14, $Z_{14}$ = 31 Zähne. Als Betriebseingriffswinkel wurde bei der einen Radpaarung 23°, bei der anderen Radpaarung 28° gewählt.

Daß als Auslegungsziel ein kleiner Normalmodul anzustreben ist, ist aus folgenden Zusammenhängen abzuleiten. Um eine sinnvolle Profilüberdeckung und damit ein akzeptables Geräuschverhalten zu erreichen, muß die Betriebseingriffsstrecke größer als die Eingriffsteilung sein; andererseits wächst mit sich vergrößernder Eingriffsstrecke die Flankenbelastung, Gleitgeschwindigkeit und Verlustleistung. Folglich muß über eine Verringerung des Normalmoduls unter Beachtung der Lebensdauergrenzen die Eingriffsteilung soweit verringert werden, daß eine Optimierung aus Funktion, Geräuschverhalten und Lebensdauer gefunden wird.

Der Normalmodul m ist entsprechend dem am Kraftfahrzeug zu übertragenden Antriebsmoment gewählt. Bei Lastkraftwagen kann er bis zu 4,0 mm betragen.

Da ein Planetenrad 14 mit zwei Sonnenrädern 7 und 9 unterschiedlicher Zähnezahl in Eingriff steht, sind Profilverschiebungen x an den Zahnflanken sowie Anpassungen der Zahnkopfhöhen und Zahnfußhöhen für die Radpaare nötig. Die Profilverschiebung $x_7$ am Eingangssonnenrad 7 beträgt $x_7$ = -1. Die Profilverschiebung am Ausgangssonnenrad $x_9$ = +2.

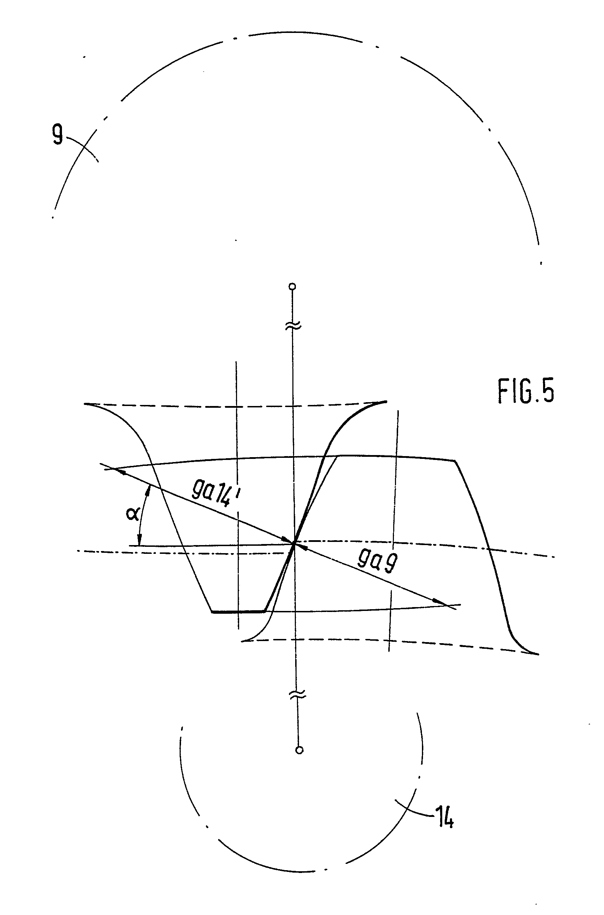

Wie Fig. 4 erkennen läßt, sind die Planetenräder 14 abgestuft ausgeführt. Ihr Kopfnutzkreisdurchmesser da 14' ist im Kämmungsbereich mit dem Ausgangssonnenrad 9, das vier Zähne mehr als das Eingangssonnenrad 7 aufweist, um 1,5 mm kleiner als der Kopfnutzkreisdurchmesser da 14 im Kämmungsbereich mit dem Eingangssonnenrad 7.

EP 0 345 445 A1

**Ansprüche**

1. Allrad-Sperrsystem im Antriebsstrang eines Kraftfahrzeugs, mit einem Planetengetriebe, das aus einem von Kraftfahrzeuggetriebe angetriebenen Eingangssonnenrad, einem koaxial daneben gelagerten und mit der zu treibenden Achse verbundenen Ausgangssonnenrad etwas größerer Zähnezahl sowie aus den mit beiden Sonnenrädern in Eingriff stehenden Planetenrädern eines Planetenträgers gebildet ist, auf dessen Drehbewegung eine Bremsvorrichtung hemmend einwirkt, dadurch gekennzeichnet, daß der Normalmodul (m) aller Zahnräder proportional dem zu übertragenden Antriebsmoment und so klein wie aus Festigkeitsgründen möglich bemessen ist und daß der Betriebs-Eingriffswinkel (α) möglichst groß ist.

2. Sperrsystem nach Anspruch 1, dadurch gekennzeichnet, daß der Normalmodul (m) zwischen ca. 1,0 mm für Personenkraftwagen und ca. 4,0 mm für Last-Kraftwagen liegt und der Betriebs-Eingriffswinkel (α) 14° bis 31° beträgt.

3. Sperrsystem nach Anspruch 1, dadurch gekennzeichnet, daß die Kopfeingriffsstrecken (ga 9 bzw. ga 14') so bemessen sind, daß sich annähernd gleiche Gleitgeschwindigkeiten an den Kopfnutzkreisdurchmessern (da 9, da 14') beider Radpaarungen ergeben.

4. Sperrsystem nach Anspruch 1, dadurch gekennzeichnet, daß der Kopfnutzkreisdurchmesser (da 14') der Planetenräder (14) im Kämmungsbereich mit dem Sonnenrad (9) größerer Zähnezahl um ca. 1,5 mm kleiner ist als der Kopfnutzkreisdurchmesser (da 14) im Kämmungsbereich mit dem Sonnenrad (7) kleinerer Zähnezahl.

4

FIG.1

FIG.2

da9

do9

9

FIG.5

FIG.3

do14

14

da14'

FIG.4

7

9

14

$d_a 14$

$d_a 14'$

FIG.5

| Europäisches Patentamt | EUROPÄISCHER RECHERCHENBERICHT | Nummer der Anmeldung |
|---|---|---|
| | | EP 89 10 7189 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 507 490  (PORSCHE)<br>* Insgesamt *<br>--- | 1 | B 60 K   17/35<br>F 16 H   55/08 |
| A | H.-CHR. GRAF V. SEHERR-THOSS: "Die Entwicklung der Zahnrad-Technik", 1965, 237/85, Seite 482, Springer-Verlag, Berlin, DE<br>* Seite 482, Zeilen 25,26,42-45 *<br>--- | 1 | |
| A | KONSTRUKTION, Band 26, 1974, Seiten 425-429, Springer Verlag, Berlin, DE; K. ROTH: "Stirnradpaarungen mit 1- bis 5-zähnigen Ritzeln im Maschinenbau"<br>* Seite 427, Spalte 1, Absätze 6-8 *<br>----- | 2-4 | |

**RECHERCHIERTE SACHGEBIETE (Int. Cl.4)**

B 60 K
F 16 H
F 16 D

Der vorliegende Recherchenbericht wurde für alle Patentansprüche erstellt

| Recherchenort | Abschlußdatum der Recherche | Prüfer |
|---|---|---|
| DEN HAAG | 25-08-1989 | MENDE H. |